# EUROPÄISCHE PATENTSCHRIFT

(11) **EP 3 414 633 B1**
(45) Veröffentlichungstag und Bekanntmachung des Hinweises auf die Patenterteilung: **08.04.2020**
(21) Anmeldenummer: 16788078.0
(22) Anmeldetag: 26.10.2016
(51) Int. Cl.: G05B 15/02, H04L 12/28

(54) **HEIMAUTOMATISIERUNGSSYSTEM**
HOME AUTOMATION SYSTEM
SYSTÈME DOMOTIQUE

(30) Priorität: 11.02.2016 DE 102016102402
(43) Veröffentlichungstag der Anmeldung: 19.12.2018
(73) Patentinhaber: Innogy SE, 45128 Essen (DE)
(72) Erfinder: BECKER, Gernot, 44269 Dortmund (DE)
(74) Vertreter: Cohausz & Florack
(86) Internationale Anmeldenummer: PCT/EP2016/075761
(87) Internationale Veröffentlichungsnummer: WO 2017/137104

(56) Entgegenhaltungen:
- US-A1- 2015 198 941

## Beschreibung

Der Gegenstand betrifft ein Heimautomatisierungssystem sowie ein Verfahren zum Betreiben eines Heimautomatisierungssystems.

Heimautomatisierungslösungen werden zunehmen interessant für Privatanwender. Die in einer Heimautomatisierung verwendeten Komponenten sind hinlänglich bekannt, so dass bei der Entwicklung von Heimautomatisierungslösungen komfortable Bedienkonzepte in den Fokus rücken. Insbesondere wird es zunehmend wichtiger, die Position bzw. Anwesenheit eines Nutzers in dem von dem Heimautomatisierungssystem gesteuerten Haus genau und zuverlässig zu erkennen. Eine exakte Positionserkennung ermöglicht es, neuartige Bedienkonzepte zu implementieren. Insbesondere ist basierend auf einer exakten Positionserkennung eine neuartige, intuitive Bedienung, z.B. basierend auf der Position eines Nutzers möglich. Eine exakte Positionserkennung ermöglicht es zudem, basierend auf dem durch die Positionserkennung ermitteltem Grundriss einer Umgebung, in dieser Aktoren und Sensoren virtuell zu platzieren sowie auch virtuell zu programmieren.

Herkömmlicherweise wird eine Anwesenheitserkennung mittels passiver Infrarotmelder durchgeführt, wie beispielhaft in der Patentanmeldung US 2015/198941 A1 gezeigt wird. Diese Infrarotmelder reagieren jedoch lediglich auf Bewegungen, so dass bei wenig Bewegung der Nutzer nicht sicher erkannt werden kann. Andere Verfahren, wie beispielsweise Ultraschallsensoren oder Mikrowellensensoren haben sich im Massenmarkt nicht durchgesetzt, weil sie eine Vielzahl von Sensoren benötigen, technisch komplex sind und somit kompliziert zu installieren. Außerdem können diese Sensoren nur eine Änderung im Raumgefüge detektieren, die auch von Positionsänderung von Gegenständen herrühren kann.

Die Aufgabe liegt nun darin, die Positionserkennung von Nutzern in Heimautomatisierungssystemen unter Verwendung von bestehenden Technologien zu verbessern und basierend auf der Positionserkennung die Einrichtung und Nutzung des Heimautomatisierungssystems zu vereinfachen.

Wenn nachfolgend von Sensoren oder Aktoren die Rede ist, ist stets gemeint, dass sowohl ein Sensor als auch ein Aktor, alternativ oder kumulativ, gemeint sein kann.

Es ist erkannt worden, dass basierend auf einer exakten Positionierung auch ein Grundriss eines Hauses, eines Gebäudes, eines Büros, einer Fabrikhalle oder dergleichen automatisch erfasst werden kann. Auch haben die Erfinder erkannt, dass basierend auf einem angezeigten Grundriss eine Programmierung des Heimautomatisierungssystems erheblich intuitiver wird. Ein Nutzer wird vorzugsweise in einer virtuellen Umgebung durch den Grundriss geführt bzw. kann selbsttätig, unter Verwendung eines Bildschirms, einer Virtual Reality Brille oder einer Augmented Reality Brille in dem Grundriss navigieren bzw. sich bewegen. Innerhalb des Grundrisses kann der Nutzer dann an geeigneten Stellen die von ihm gewünschte Programmierung durchführen. Die räumliche Zuordnung seiner Programmanweisungen zu einem Sensor und/oder Aktor ist unmittelbar möglich, da die aktuelle Position im Grundriss bekannt ist und somit auch die dort befindlichen Sensoren und/oder Aktoren.

Nicht nur die Programmierung wird vereinfacht, sondern es ist auch möglich, unter Verwendung der Position des Nutzers, Statusangaben von Sensoren und/oder Aktoren auszugeben. Insbesondere kann durch Ermittlung der Position des Nutzers in dem Grundriss ermittelt werden, welche Sensoren oder Aktoren in einem Blickbereich dieses Nutzers sind. Von den Sensoren oder Aktoren, die im Blickbereich des Nutzers, abhängig von seiner detektierten Position sind, kann der aktueller Status abgefragt. Dann kann dem Nutzer jeweils an einer korrekten Position im Grundriss der Sensor bzw. Aktor zusammen mit seinem Status angezeigt werden.

Hierzu umfasst das Heimautomatisierungssystem zunächst Anzeigemittel eingerichtet zur Anzeige einer Ansicht von zumindest einem Teil eines Grundrisses einer räumlichen Umgebung des Heimautomatisierungssystem. Im einfachsten Fall können die Anzeigemittel durch ein Display bzw. Bildschirm gebildet werden. Die Anzeigemittel können aber auch z.B. eine Virtual-Reality Brille oder auch eine Augmented Reality Brille sein. Die Anzeigemittel können jeweils einen Ausschnitt des Grundrisses anzeigen. Das heißt, dass die Anzeigemittel neben dem gesamten Grundriss auch nur einen Teil davon anzeigen können. Insbesondere wenn die Anzeigemittel eine der genannten Brillen sind, könnte der Grundriss auch eine 3D Ansicht sein. Auf den Anzeigemitteln lassen sich vorzugsweise nicht nur die Umrisse des Grundrisses, also z.B. Wände, Mauern, Türen, Durchgänge etc., sondern auch Installationen, wie z.B. Heizungen, Lampen, Fenster, Türen etc. anzeigen. Darüber hinaus lassen sich Sensoren und Aktoren im Grundriss anzeigen, wobei deren Position entweder automatisch durch Positionsbestimmung des jeweiligen Sensors oder Aktors erfolgt, oder durch manuelle Positionierung durch den Nutzer. Im Grundriss wird somit ein Sensor bzw. Aktor an seiner "tatsächlichen" Position angezeigt. Abhängig von einer aktuellen Position des Nutzers im Grundriss bzw. seiner Blickrichtung kann dann auch noch die Anzeige nur derjenigen Sensoren bzw. Aktoren erfolgen, die im Blickbereich des Nutzers sind.

Neben den Anzeigemittel sind auch Programmiermittel vorgesehen. Die Programmiermittel sind eingerichtet zur Programmierung zumindest einer Aktion eines Aktors des Heimautomatisierungssystems basierend auf der aktuell angezeigten Ansicht des Grundrisses und einer Funktion des Aktors und/oder eines Sensors des Heimautomatisierungssystems. Mit den Programmiermitteln lassen sich Beziehungen zwischen Aktoren und Sensoren programmieren. Auch können mit den Programmiermitteln Funktionen von Aktoren und/oder Sensoren jeweils einander zugeordnet werden.

Bei der Programmierung kann basierend auf der aktuell angezeigten Ansicht einem Aktor und/oder einem Sensor eine Position im Grundriss zugeordnet werden. Mit Hilfe der Programmiermittel ist es möglich, Aktoren und/oder Sensoren im Grundriss zu platzieren. Der Nutzer kann abhängig von seiner Ansicht eine Position einem Sensor und/oder eine Aktor zuordnen.

Mit Hilfe der Programmiermittel kann eine Programmierung zumindest einer Aktion eines Aktors des Heimautomatisierungssystems erfolgen. Die Programmierung ist dabei basierend auf der aktuell angezeigten Ansicht des Grundrisses und einer Funktion des Aktors oder eines Sensors des Heimautomatisierungssystems. Je nachdem, welches die aktuelle Ansicht des Grundrisses ist, können z.B. die jeweils "sichtbaren" Sensoren und/oder Aktoren in dem Grundriss angezeigt werden. Ferner kann dann mit den Programmiermitteln auf die Funktionen und/oder Parameter dieser in der aktuellen Ansicht dargestellten Aktoren und/oder Sensoren zugegriffen werden. Mit Hilfe dieser Funktionen und/oder Parameter können dann die Sensoren und/oder Aktoren programmiert werden. Insbesondere können Zuordnungen zwischen dargestellten Aktoren/Sensoren und dargestellten und/oder nicht dargestellten Aktoren/Sensoren programmiert werden. Auch können räumliche Zuordnungen zwischen dem Grundriss und zu programmierenden Sensoren oder Aktoren durchgeführt werden.

Die Programmiermittel können auch dazu eingerichtet sein, in der aktuell angezeigten Ansicht in dem Grundriss virtuelle Bewegungsvektoren und/oder virtuelle Triggerpunkte zu definieren und diesen jeweils zumindest eine Aktion eines Aktors zuzuordnen. Bewegungsvektoren können durch den Nutzer in dem Grundriss definiert werden. Bewegungsvektoren können auch Korridore bzw. Vektorscharen beinhalten. Auch können Ausgangsbereiche und Endbereich definiert werden. Wenn ein Nutzer sich dann entlang eines Vektors, entlang eines Korridors und/oder von einem Ausgangsbereich in einen Endbereich bewegt, was durch die Positionserkennung detektiert werden kann, dann kann durch diese Bewegung eine zugeordnete Aktion ausgelöst werden. Ein Triggerpunkt kann ein räumlich umgrenzter Bereich sein. Wenn ein Nutzer diesen Bereich betritt, was ebenfalls durch die Positionserkennung detektiert werden kann, kann ebenfalls eine zugeordnete Aktion ausgelöst werden. Diese Aktion kann in dem Grundriss programmiert werden.

Mit Hilfe der aktuellen Ansicht ist es besonders komfortabel, die genannten Bewegungsvektoren, Korridore und/oder Triggerpunkte zu setzen. Der Nutzer kann in dieser Ansicht die jeweilige Information vorzugsweise mit einem Eingabegerät graphisch "einzeichnen". Ferner werden dem Nutzer vorzugsweise Funktionen, Aktionen, Parameter und/oder dergleichen von Sensoren oder Aktoren angezeigt, welche er mit den definierten Bewegungsvektoren, Korridoren und/oder Triggerpunkten verknüpfen kann.

Die Erfassungsmittel sind vorzugsweise zur Erfassung des Grundrisses eingerichtet sind, insbesondere dass die Erfassungsmittel zur Erfassung eines 3D Grundrisses eingerichtet sind. Die Erfassungsmittel können z.B. Positionsinformationen von Nutzern laufend auswerten und aus den ausgewerteten Positionsinformation den Grundriss erstellen. Insbesondere können Bereichen, von denen keine Positionsinformationen empfangen werden, als "tote" Bereich gekennzeichnet sein. "Tote" Bereich sind z.B. Wände, Mauern, Leitungsschächte usw. Auch ist es möglich, z.B. mittels eines Hausroboters, z.B. mittels eines Staubsaugerroboters, den Grundriss auszumessen. Hierbei können z.B. Positionsinformationen von dem Roboter erfasst werden und zur Erstellung des Grundrisses genutzt werden. Ein mit Hilfe eines CAD Programms erstellter elektronisch Grundriss kann über eine geeignete Schnittstelle in die Erfassungsmittel geladen werden. Insbesondere können vorhandene Architektenpläne über die Erfassungsmittel elektronisch eingelesen werden und für die weitere Verwendung in dem gegenständlichen System verfügbar gemacht werden.

Augmented Reality ist eine weitere Ausgestaltung. Hiermit ist es möglich, reale, angezeigte Objekte mit weiteren, in die Anzeige eingefügten Objekten zu ergänzen. Z.B. kann der Grundriss zusammen mit einem tatsächlich aktuell aufgenommenen Bild der Umgebung auf einem Display dargestellt werden. Zusätzlich können in die Anzeige Informationen zu im Blickfeld angeordneten Sensoren oder Aktoren eingefügt werden. Die Anzeigemittel sind daher vorzugsweise zur Anzeige einer Ansicht des Grundrisses zusammen mit einer Anzeige eines realen Bildes eingerichtet.

Um die Anzeige möglichst verständlich zu gestalten, ist es vorteilhaft, wenn Sensoren oder Aktoren als solche unmittelbar in der Anzeige erkennbar sind. Dies ist insbesondere dann der Fall, wenn die Sensoren oder Aktoren bildlich dargestellt werden. Insbesondere können Sensoren oder Aktoren repräsentierende Ikonen, z.B. Piktogramme, vorgesehen sein, welche in der Anzeige dargestellt werden. Wird z.B. ein real aufgenommenes Bild angezeigt, kann die Blickrichtung dieses Bildes erfasst werden. Dann kann ermittelt werden, welche Sensoren oder Aktoren in diesem Blickbereich vorhanden sind. Diese können dann mit den ihnen zugeordneten Ikonen repräsentiert in die Anzeige eingeblendet werden.

Auch wird vorgeschlagen, dass die Anzeigemittel zur Anzeige der Ikonen abhängig von einem Status eines Aktors und/oder Sensors eingerichtet sind. Hierbei ist es beispielsweise möglich, nur dann Ikonen anzuzeigen, wenn die Sensoren und/der Aktoren aktiv sind. Auch kann es z.B. möglich sein, wenn ein Sensor in einer aktuellen Ansicht programmiert wird, nur diejenigen Aktoren anzuzeigen, die mit dem zu programmierenden Sensor interagieren können.

Ach wird vorgeschlagen, dass die Programmiermittel zum Empfangen von Statuswerten von simulierten Umgebungsvariablen eingerichtet sind, wobei die Umgebungsvariablen einen programmierten Einfluss auf einen Status eines Aktors und/oder Sensors haben und dass die Anzeigemittel zum Anzeigen eines auf den simulierten Umgebungsvariablen basierenden Status des Aktors und/oder Sensors eingerichtet sind. Mit Hilfe der simulierten Umgebungsvariablen ist es möglich, eine Programmierung zu testen. So ist es beispielsweise möglich, Dämmerungswerte, Windstärkewerte, Temperaturwert, Staus von anderen Sensoren, z.B. von Fensterkontakten, von Tastern oder Schaltern, von Thermostaten oder dergleichen als Umgebungsvariablen zu simulieren. Sobald die Umgebungsvariablen simuliert sind, werden von weiteren Sensoren oder Aktoren Aktionen durchgeführt oder ausgelöst, welche diesen Umgebungsvariablen zugeordnet wurden. Vorzugsweise wird eine entsprechende Statusänderung nicht durchgeführt, sondern nur in der Anzeige angezeigt. Ein Nutzer kann so überprüfen, ob die von ihm programmierten Aktionen auch richtig sind. Die Überprüfung erfolgt in der Anzeige durch eine Anzeige des Status der angezeigten Aktoren oder Sensoren.

Auch wird vorgeschlagen, dass die Anzeigemittel eine mobile Anzeigeeinrichtung aufweisen und dass die Anzeigemittel einen Teil des Grundrisses abhängig von ihrer detektierten Position in dem Grundriss darstellen. Mobile Anzeigeeinrichtungen können z.B. Displays von Smartphones oder Tablet Computern sein. Auch Laptops können als mobile Anzeigeeinrichtungen agieren. Auch Virtual Reality Brillen oder Augmented Reality Brillen können als Anzeigeeinrichtung dienen. Deren Position in dem Grundriss lässt sich bestimmten. Ist die Position bekannt, so kann in der Anzeige der Grundriss eingeblendet werden, wie er sich aus der aktuellen Position darstellt.

Auch wird vorgeschlagen, dass die Erfassungsmittel zur Erfassung einer Nutzergeste eingerichtet sind, dass die Programmiermittel die erfasste Nutzergeste abhängig von der Anzeige des Grundrisses auswerten und zumindest einen Aktor und/oder Sensor abhängig von der Nutzergeste und der aktuell angezeigten Ansicht des Grundrisses programmieren. In der Anzeige kann z.B. ein Sensor und ein Aktor angezeigt sein. Ein Nutzer kann z.B. als Nutzergeste eines Handbewegung durchführen. Diese Handbewegung kann z.B. von dem Sensor zu dem Aktor sein. Wird eine solche Geste erkannt, so kann z.B. eine Programmierung derart erfolgen, dass der Sensor dem Aktor zugeordnet wird. Anschließend können z.B. Optionen eingeblendet werden, wie der Aktor auf verschiedene Status des Sensors reagieren kann. Der Nutzer kann dann z.B. durch Handbewegung die Reaktionen des Aktors auf einen Status eines Sensors programmieren.

Es ist erkannt worden, dass mit Hilfe einer Auswerteeinrichtung Informationen von Sendern derart ausgewertet werden können, dass aus den Informationen der Sender Positionsinformationen abgeleitet werden können. Sender im Sinne dieser Anmeldung können Handsender sein, die energetisch eingespeist sind. Solche Sender können beispielsweise Nahfeldsender, beispielsweise NFC-Sender, RFID-Sender, WLAN-Sender, Bluetooth-Sender oder dergleichen sein. Solche Sender sind heutzutage schon in sogenannten Smartwatches als auch in sogenannten Smartphones eingebaut. Die Sender verfügen über eine Sendeeinrichtung, mit der die Sender zumindest eine Senderkennung aussenden können. Die Sender senden eine Senderkennung aus, sodass an jedem Empfänger feststellbar ist, von welchem Sender ein Signal stammt.

In der Regel basieren moderne Heimautomatisierungssysteme auf einem Funkprotokoll, bei dem Sensoren und Aktoren drahtlos miteinander kommunizieren. Sensoren und Aktoren eines Heimautomatisierungssystems sind beides Sensoren im Sinne des Gegenstands. Auch Aktoren sensieren auf der Luftschnittstelle Signale und sind daher Sensoren für Senderkennung.

Die drahtlose Kommunikation eines Heimautomatisierungssystems erfolgt in der Regel im gleichen Frequenzband, in dem die Sender ihre Senderkennung aussenden. Es ist nunmehr erkannt worden, dass mit Hilfe der ohnehin vorhandenen Sensoren des Heimautomatisierungssystems die Senderkennungen der verschiedenartigen Sender empfangen werden können. Insbesondere die fest installierten Sensoren und Aktoren eines Heimautomatisierungssystems lauschen auf der Luftschnittstelle nach Signalen für das Heimautomatisierungssystem. Insbesondere Steuermeldungen des Heimautomatisierungssystems werden über die Luftschnittstelle übertragen. Beim Lauschen auf der Luftschnittstelle können diese Sensoren und Aktoren auch als Sensoren zur Erkennung und/oder Bewertung von Signalen von Sendern wie sie oben beschrieben wurden, dienen.

Jeder Sensor kann ein Empfangssignal eines Senders empfangen. Dieses Empfangssignal eines Senders ist insbesondere das Signal, mit dem der Sender seine Senderkennung ausgesendet hat. Beim Empfang dieses Signal lässt sich dessen Empfangsfeldstärke ermitteln. Hierzu geeignete Empfangschips sind bekannt. Die Empfangschips geben neben der empfangenen Senderkennung auch eine Information zu der Empfangsfeldstärke aus. Zusammen mit der Information, welcher Sensor dieses Signal empfangen hat, kann ein Empfangssignal erfasst werden. Jeder Sensor kann eine eindeutige Kennung besitzen, sodass stets nachvollziehbar ist, welcher Sensor welches Empfangssignal empfangen hat.

Die Sensoren übermitteln die aus zumindest der Empfangsfeldstärke, der Senderkennung und der Sensorkennung zusammengestellten Empfangsinformationen jeweils an eine Auswerteeinrichtung.

Die Auswerteeinrichtung kann die Empfangsinformationen von mehreren Sensoren auswerten. Bei der Auswertung können die verschiedenen Empfangsinformationen, welche jeweils von einem Sender stammen und von mehreren Sensoren in einem gleichen Sendezeitraum, in dem der Sender seine Kennung ausgesendet hat empfangen wurden, als Fingerabdruck des Senders verstanden werden. Da jede einzelne Empfangsfeldstärke in jedem Sensor gegebenenfalls unterschiedlich ist, und die Empfangsfeldstärke abhängig insbesondere von der Entfernung des Senders vom jeweiligen Sensor ist, kann aus den Empfangsinformationen verschiedener Sensoren eine für die Position des Senders typische Information als Fingerabdruck ermittelt werden. Ein solcher Fingerabdruck kann auch als aktuelle Signatur bezeichnet werden. Ein solcher Fingerabdruck kann auch als positionsvariable Signatur bezeichnet werden.

Somit ist es möglich, durch die Auswertung von verschiedenen Empfangsinformationen, die von verschiedenen Sensoren empfangen werden und einem einzelnen Sender zugeordnet werden können, die Position dieses Senders zu ermitteln und abhängig davon Handlungen oder Regeln im Heimautomatisierungssystem abzuleiten.

Wenn in diesem Dokument von Sensoren die Rede ist, sind dies nicht nur klassische Sensoren im Sinne eines Heimautomatisierungssystems, sondern stets umfasst sind alle Typen von Vorrichtungen, welche in das Heimautomatisierungssystem eingebunden sein können, insbesondere solche, die im klassischen Sinne als Sensoren und Aktoren eines Heimautomatisierungssystems verstanden werden, beispielsweise Taster, Schalter, Temperatursensoren, Helligkeitssensoren, Öffnungssensoren, Alarmgeber, Stellmotoren oder dergleichen.

Zur Auswertung der Position eines Senders kann es sinnvoll sein, die Empfangsinformationen nach Senderkennungen zu sortieren. Insofern wird vorgeschlagen, dass die Auswerteeinrichtung für jeweils einen Sender aus den Empfangsinformationen von zumindest zwei Sensoren die jeweiligen Empfangsfeldstärken und Sensorkennungen als aktuelle Signatur zu erfassen. Diese Erfassung der aktuellen Signatur wird vorzugsweise in der Auswerteeinrichtung durchgeführt. Jeder Sender sendet seine Senderkennung aus, welche von verschiedenen Sensoren empfangen wird. Dieses Empfangssignal hat eine charakteristische Empfangsfeldstärke. Zusammen mit der Information, von welchem Sensor die Empfangsinformation stammt, kann eine aktuelle Signatur erfasst werden. Die aktuelle Signatur kann ein Satz aus Sensorkennung und Empfangsfeldstärke von jeweils mehr als einem Sensor sein. Mit Hilfe dieser Signatur, die einen typischen Fingerabdruck für die Position des Senders darstellt, ist eine Positionserkennung des Senders innerhalb des Heimautomatisierungssystems möglich.

Um die Position des Senders einem örtlichen Bereich innerhalb des Heimautomatisierungssystems zuordnen zu können, ist ein Anlernprozess notwendig. Zunächst kennt das System nur die Signatur, kann diese jedoch noch keinem Ort zuweisen. Aus diesem Grunde wird vorgeschlagen, dass in einem Anlernprozess zumindest eine aktuelle Signatur als Positionssignatur einem örtlichen Bereich, insbesondere einem Raum, zugeordnet wird und diese Zuordnung gespeichert wird. Diese Zuordnung kann die Auswerteeinrichtung durchführen. Insbesondere kann der Nutzer während des Anlernens sich mit dem Sender bewegen und zu bestimmten Zeitpunkten festlegen, dass seine Position erkannt werden soll. Die dann erfasste aktuelle Signatur weist der Nutzer einem Raum zu, indem er beispielsweise auf einem mobilen Endgerät, einem Tablet, Smartphone oder dergleichen, seine aktuelle tatsächliche Position angibt bzw. angibt, welchem Raum er die aktuelle Signatur zuordnen möchte. Diese Zuordnung wird als Positionssignatur gespeichert.

Zur genauen Positionierung ist es relevant, dass ein möglichst großer Datensatz für die Positionssignatur verwendet wird, das heißt möglichst viele Referenzpunkte bekannt sind. Insofern ist es vorgeschlagen, dass ein Satz aus Empfangsfeldstärke und jeweiliger Sensorkennung von zumindest zwei Sensoren, vorzugsweise mehr als zwei Sensoren, insbesondere einer Vielzahl an Sensoren als Positionssignatur gespeichert ist. Eine Positionssignatur kann somit von verschiedenen Sensoren die jeweilig empfangene Empfangsfeldstärke enthalten und in einem Datensatz abgespeichert werden.

Ein Raum bzw. ein örtlicher Bereich muss nicht nur eine einzige Position beinhalten, sondern kann auch eine gewisse Ausbreitung haben. Um dieser Tatsache gerecht zu werden, ist es sinnvoll, mehrere aktuelle Signaturen als Positionssignaturen einem gleichen örtlichen Bereich zuzuordnen. Das heißt, dass für jeweils einen örtlichen Bereich eine Matrix aus mehreren Positionssignaturen abgespeichert werden kann. Für eine genaue Positionsermittlung ist es dann möglich, die jeweils aktuelle Signatur mit den Positionssignaturen der Matrizen abzugleichen und abhängig von einer bestimmten Regel, welche nachfolgend noch beschrieben wird, herzuleiten, in welchem Raum bzw. welchem örtlichen Bereich sich der Sender befindet.

Gemäß einem Ausführungsbeispiel wird zur Positionserkennung eines Senders vorgeschlagen, dass die Auswerteeinrichtung aus den Empfangsinformationen für einen Sender eine aktuelle Signatur erfasst und die aktuelle Signatur mit zumindest zwei Positionssignaturen vergleicht. Nach dem Anlernprozess ist für zumindest einen räumlichen Bereich, vorzugsweise für zumindest zwei oder mehr räumliche Bereiche, jeweils zumindest eine Positionssignatur, vorzugsweise ein Satz aus mehreren Positionssignaturen abgespeichert. Wird nun eine aktuelle Signatur empfangen, kann sie mit den abgespeicherten Positionssignaturen verglichen werden. Insbesondere kann dann die Positionssignatur gesucht werden, welche die geringste Abweichung von der aktuellen Signatur hat, insbesondere bei der die Feldstärken der einzelnen Sensoren der aktuellen Signatur in Summe oder in Mittel am geringsten von den Feldstärken einer der Positionssignaturen abweichen. Ist diese Positionssignatur ermittelt worden, kann der dieser Positionssignatur zugeordnete örtliche Bereich ermittelt werden und festgelegt werden, dass der Sender sich in diesem örtlichen Bereich befindet.

Sind für einen örtlichen Bereich mehrere Positionssignaturen gespeichert, so kann es sinnvoll sein, einen mittleren Differenzbetrag, vorzugsweise ein arithmetisches Mittel der Differenzbeträge der aktuellen Signatur von allen Positionssignaturen die einem örtlichen Bereich zugeordnet sind, zu ermitteln. Dieser Mittelwert wird dann mit den Mittelwerten der Abweichung von den Positionssignaturen der anderen örtlichen Bereiche verglichen und der Wert mit der kleinsten Abweichung bestimmt den örtlichen Bereich, der dem Sender zugeordnet wird.

Gemäß einem Ausführungsbeispiel wird vorgeschlagen, dass für einen Vergleich die Auswerteeinrichtung aus den Empfangsinformationen zunächst diejenigen Empfangsinformationen selektiert, die einem Sender zuzuordnen sind.

Es ist denkbar, dass verschiedene Sender im Heimautomatisierungssystem gleichzeitig aktiv sind und ihre Senderkennungen aussenden. Um für jeden Sender jeweils eine eigene Positionsbestimmung durchzuführen ist es sinnvoll, zunächst aus den Empfangsinformationen diejenigen zu selektieren, die von ein und demselben Sender stammen. Hierzu kann in der Auswerteeinrichtung zunächst überprüft werden, welche Senderkennung eine Empfangsinformation hat und die Empfangsinformation mit der gleichen Senderkennung können für eine aktuelle Signatur verwendet werden.

Wie bereits erwähnt, kann die aktuelle Signatur eines jeweiligen Senders mit Positionssignaturen verglichen werden. Hierbei können die Werte für die Feldstärke des Empfangsfeldes der Senderkennung jeweils verglichen werden und eine Summe der Differenzbeträge für jeden Vergleich erstellt werden. Derjenige Differenzbetrag, welcher geringer ist, gehört zu der Positionssignatur, die dem örtlichen Bereich zugeordnet ist, in welchem der Sender sich befindet.

Gemäß einem Ausführungsbeispiel wird vorgeschlagen, dass der kleinste Differenzbetrag zwischen aktueller Signatur und zumindest zwei Sätzen von Positionssignaturen ermittelt wird. Der Sender wird dem örtlichen Bereich zugeordnet, bei dessen Satz an Positionssignaturen der kleinste Differenzbetrag ermittelt wurde.

Während des Betriebs können weitere Positionssignaturen geschaffen werden. Dies ist beispielsweise möglich, in dem aktuelle Signaturen stets dann zu Positionssignaturen für einen bestimmten örtlichen Bereich umgewandelt werden, wenn die Position des Senders bekannt ist. Dies kann beispielsweise dann der Fall sein, wenn ein Nutzer einen Sender bei sich trägt und einen Schalter des Heimautomatisierungssystems bedient. In dem Moment ist bekannt, in welchem Raum der Schalter ist. Zum Zeitpunkt der Bedienung wird die aktuelle Signatur des Senders erfasst und als Positionssignatur dem Raum zugeordnet, in dem sich der Schalter befindet. Durch ein iteratives Anpassen bzw. Erweitern der Positionssignaturen für die jeweiligen örtlichen Bereiche kann die Genauigkeit der Positionserkennung verbessert werden.

Gemäß einem Ausführungsbeispiel wird vorgeschlagen, dass die Auswerteeinrichtung als Teil eines Sensors oder als von einem Sensor getrennte Einrichtung innerhalb des Heimautomatisierungssystems gebildet ist. Die Auswerteeinrichtung kann somit als getrennter Teil bzw. getrennte Einrichtung des Heimautomatisierungssystems zur Verfügung gestellt sein oder integraler Bestandteil sein. Insbesondere in einem Sensor oder Aktor des Heimautomatisierungssystems kann die Auswerteeinrichtung angeordnet sein.

Die Auswertung der Signaturen kann durch den Einsatz eines neuronalen Netzes erfolgen. Dies ist bereits eigenständig erfinderisch und kann mit allen hier beschriebenen Merkmalen kombiniert werden. Das neuronale Netz lernt die vom Benutzer angegebenen Eingangspositionen und wird während der Benutzung des Systems und insbesondere auch durch von dem Nutzer angebrachten Korrekturen weiter angelernt. Das neuronale Netz wird mit der Zeit immer zuverlässiger und besser. Insbesondere könnte ein sogenanntes Kohonen Netz eingesetzt werden. Diese kann die Positionen des Benutzer als Reiz und die Ausgabewerte als Trigger darstellen.

Gemäß einem Ausführungsbeispiel wird vorgeschlagen, dass die Sensoren ortsfest in dem Heimautomatisierungssystem eingebunden sind und/oder dass der Sender ein mobiler, vorzugsweise energetisch eigengespeister Sender ist. In dem Heimautomatisierungssystem sind verschiedenartige Sensoren und Aktoren ortsfest eingebunden. Diese können als Sensoren für die gegenständliche Positionsermittlung verwendet werden.

Ein energetisch eigengespeister Sender kann derart verstanden werden, dass dieser sich beispielsweise aus einer Batterie speist. Wie erwähnt, senden die Sensoren als auch der Sender auf einer gleichen Trägerfrequenz, insbesondere auf 868 MHz.

Gemäß einem Ausführungsbeispiel wird vorgeschlagen, dass abhängig von dem dem Sender anhand der aktuellen Signatur zugeordnetem örtlichen Bereich die Auswerteeinrichtung ein Steuerungstelegramm für einen Aktor des Heimautomatisierungssystems erstellt. Dieser Aspekt ist bereits eigenständig erfinderisch. Hierbei ist es möglich, dass nach bestimmten Regeln, abhängig von der Positionserkennung, Steuerungstelegramme erstellt werden. Eine Positionserkennung kann, auch unabhängig von dem oben beschriebenen, in dem Heimautomatisierungssystem etabliert sein. Sobald eine Position des Senders bekannt ist, kann einer Position eine Regel zugeordnet werden und abhängig von dieser Regel kann das Steuerungstelegramm für ein aktuelles Heimautomatisierungssystem erstellt werden.

Gemäß einem Ausführungsbeispiel wird vorgeschlagen, dass ein Sender seine Senderkennung in festgelegten Intervallen aussendet. Das bedeutet, dass der Sender nicht ständig Senderkennungen aussendet sondern dies nur zu bestimmten Zeiten tut. Hierdurch wird vermieden, dass der Sender, insbesondere wenn er energetisch eigengespeist ist, zu schnell seine elektrisch gespeicherte Energie aufbraucht. Dies erhöht die Lebensdauer des Senders.

Gemäß einem Ausführungsbeispiel wird vorgeschlagen, dass die Auswerteeinrichtung die Intervalle erfasst. Sobald in der Auswerteeinrichtung bekannt ist, in welchen Intervallen der Sender seine Senderkennung aussendet und wenn die Zeit zwischen Sender und Heimautomatisierungssystem synchronisiert ist, ist es möglich, abhängig von den Intervallen die Sensoren zum Empfangen von Empfangsinformationen zu aktivieren. Das heißt, dass die Sensoren nur dann auf der Luftschnittstelle lauschen, wenn zu erwarten ist, dass der Sender ein Empfangssignal aussendet. Die Auswerteeinrichtung kann die Sensoren entsprechend anweisen und über die Intervalle informieren.

Auch ist es möglich, dass die Empfangsintervalle bzw. Empfangszeiten der Sensoren des Heimautomatisierungssystems bekannt sind und die Auswerteeinrichtung diese Informationen dem Sender zur Verfügung stellt. In diesem Fall kann der Sender dann abhängig von der Empfangsfähigkeit des Heimautomatisierungssystems, also zu den Zeiten, zu denen die Sensoren ohnehin auf der Luftschnittstelle lauschen, seine Senderkennung aussenden.

Gemäß einem Ausführungsbeispiel wird vorgeschlagen, dass die Auswerteeinrichtung abhängig von einer vorhergehenden Bestimmung des örtlichen Bereichs eines Senders eine Auswahl von Sensoren aktiviert. Es ist erkannt worden, dass nicht stets alle Sensoren des Heimautomatisierungssystems die Senderkennung empfangen müssen. Vielmehr ist, wenn einmal die Position des Senders erkannt wurde, davon auszugehen, dass dieser sich linear in dem Raum bewegt und somit nur in angrenzenden Bereichen zu der aktuellen Position durch die dort angeordneten Sensoren gelauscht werden muss. Hierdurch wird Energie bei den Sensoren eingespart, die weit entfernt von der aktuellen Position des Senders sind, da diese in dem Fall nicht lauschen müssen. Auch kann diese lineare Änderung wieder von dem neuronalen Netz interpretiert werden, welches wiederum die Vorhersage für vorbekannte, angelernte Benutzerverhalten interpoliert und daraus programmierte Aktionen ableiten kann.

Das Bewegungsprofil des Senders kann auch einen Gradienten umfassen, das heißt, dass seine Geschwindigkeit im Raum als Positionsveränderung pro Zeiteinheit bewertet wird. Abhängig von diesem Gradienten kann eine Auswahl der Sensoren erfolgen, die aktiviert werden, um die Senderkennung zu empfangen. Je schneller sich ein Sender bewegt, desto größer kann der Bereich sein, der um den aktuellen örtlichen Bereich gespannt ist, in dem die Sensoren aktiviert werden.

Ein weiterer, ebenfalls eigenständig erfinderischer Aspekt kann darin bestehen, dass ein Sender zumindest ein Bedienelement hat, dass dem Bedienelement innerhalb des Heimautomatisierungssystems zumindest eine Funktion zugeordnet ist, und dass die zugeordnete Funktion abhängig von der Bestimmung des örtlichen Bereiches eines Senders ist. Unabhängig von der oben beschriebenen Positionserkennung ist es möglich, dass ein Sender, beispielsweise ein Handsender, ein Smartphone, ein Tablet oder dergleichen in dem Heimautomatisierungssystem seine Senderkennung aussendet und/oder in dem Heimautomatisierungssystem eingebunden ist. In diesem Sender kann beispielsweise ein Bedienelement vorhanden sein, welches für eine bestimmte Funktion innerhalb eines Raumes gedacht ist. Dies kann beispielsweise das Einschalten der Deckenbeleuchtung sein. Somit kann eine generische Funktion einem stets selben Bedienelement zugeordnet sein. Ist die Position des Senders bekannt, so kann die generische Funktion abhängig der Position durchgeführt werden, in dem aus der generischen Funktion eine für die aktuelle Position gültige Funktion abgeleitet wird.

In einem Beispiel kann dies bedeuten, dass die generische Funktion "Deckenbeleuchtung", wenn die erkannte Position in einem ersten Raum ist, in die Funktion "Einschalten der Deckenleuchte in dem ersten Raum" umgewandelt wird. Wenn die Position in einem zweiten Raum erkannt wird, wird die generische Funktion in die Funktion "Einschalten der Deckenleuchte in dem zweiten Raum" umgewandelt.

In diesem Zusammenhang sei erwähnt, dass der Sender mit dem Bedienelement nicht zwangsläufig zusammenfallen muss mit dem Sender, welcher die Senderkennung aussendet. Vielmehr können die Sender auch auseinanderfallen und baulich getrennte Einheiten sein.

Gemäß einem Ausführungsbeispiel wird vorgeschlagen, dass der Sender zumindest ein Bedienelement hat, dass dem Bedienelement innerhalb des Heimautomatisierungssystems zumindest eine Funktion zugeordnet ist und dass die zugeordnete Funktion jeweils an dem Aktor ausgeführt wird, welcher dem bestimmten örtlichen Bereich eines Sensors zugeordnet ist. Auch hier können die Sender auseinanderfallen.

Die zuvor genannten Verfahren können auch als Computerprogramm oder als auf einem Speichermedium gespeichertes Computerprogramm realisiert werden. Hierbei kann ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale und Teilmerkmale der Beschreibung und/oder der abhängigen sowie unabhängigen Ansprüche, auch unter vollständiger oder teilweiser Umgehung von Merkmalen oder Teilmerkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1: eine schematische Ansicht eines Systems mit Sensoren und einer Auswerteeinrichtung;
- Fig. 2: eine schematische Ansicht eines Systems mit einem Sender und mehreren Sensoren;
- Fig. 3: eine schematische Ansicht einer Empfangsinformation;
- Fig. 4: eine schematische Ansicht einer Matrix mit Positionssignaturen;
- Fig. 5: eine schematische Ansicht eines Vergleichs einer aktuellen Signatur mit Positionssignaturen;
- Fig. 6: eine schematische Ansicht eines Handsenders und der Anwendung dieses in einem Heimautomatisierungssystem;
- Fig. 7: eine schematische Ansicht von Sende- und Empfangsintervallen;
- Fig. 8: eine schematische Ansicht eines Grundrisses;
- Fig. 9: eine schematische Ansicht eines Grundrisses zusammen mit angezeigten Sensoren und Aktoren;
- Fig. 10: eine schematische Ansicht einer graphischen Zuordnung zwischen Sensoren und Aktoren;
- Fig. 11a: eine schematische Ansicht eines Bewegungsvektors in einem Grundriss;
- Fig. 11b: eine schematische Ansicht eines Bewegungskorridors in einem Grundriss;
- Fig. 11c: eine schematische Ansicht eines Triggerpunktes in einem Grundriss;

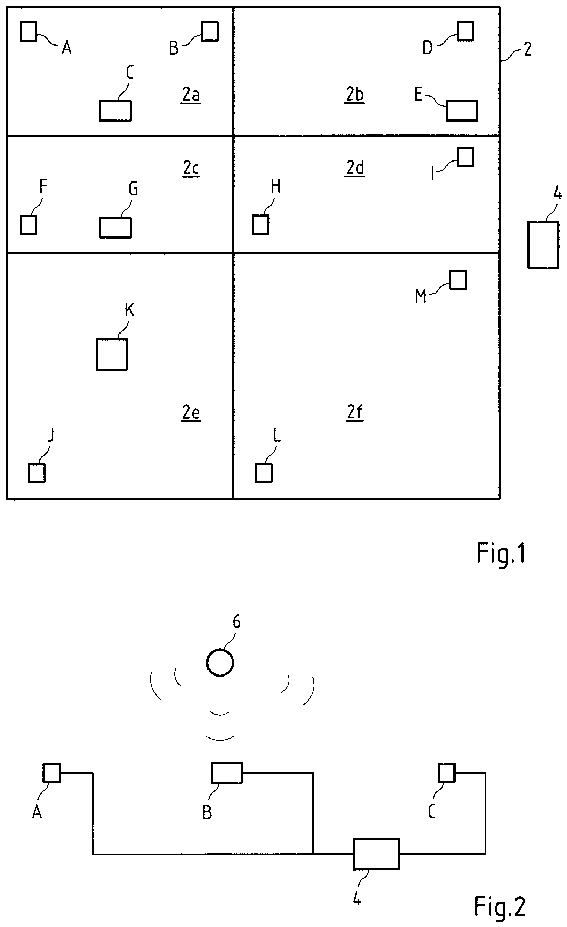

Fig. 1 zeigt einen Bereich 2, in dem ein Heimautomatisierungssystem etabliert ist. Der Bereich 2 ist in sechs räumliche Bereiche 2a-f unterteilt. Die räumlichen Bereiche 2a-f können beispielsweise unterschiedliche Räume in einem Gebäude sein oder auch bestimmte Bereiche innerhalb eines Raumes. In jedem der räumlichen Bereiche 2a-f ist zumindest einer der Sensors A-M des Heimautomatisierungssystems installiert.

In dem in Fig. 1 gezeigten Beispiel sind in dem Bereich 2a beispielsweise die Sensoren A, B und C installiert, in dem Bereich 2b sind die Sensoren D und E installiert, in dem Bereich 2c sind die Sensoren F und G installiert, in dem Bereich 2d sind die Sensoren H und I installiert, in dem Bereich 2e sind die Sensoren J und K installiert und in dem Bereich 2f sind die Sensoren L und M installiert.

Neben den Sensoren A-M ist eine Auswerteeinrichtung 4 vorgesehen, welche drahtlos oder drahtgebunden in Kommunikation mit den Sensoren A-M steht.

Die Sensoren A-M können verschiedenste Sensoren oder Aktoren eines Heimautomatisierungssystems sein. So sind beispielsweise Raumthermostate, Bewegungsmelder, Feuermelder, Taster, Schalter, Schaltaktoren, Dimmaktoren, Binäreingänge, Rolladensteuerung, Lüftungssteuerung, Klimaanlagesteuerung, Kameras oder dergleichen denkbare Sensoren A bis M im Sinne des Gegenstandes. Die Sensoren A-M haben gemeinsam, dass sie in einem gemeinsamen Funkband miteinander kommunizieren können und somit Teil des Heimautomatisierungssystems sind. Ebenfalls Teil des Heimautomatisierungssystems kann die Auswerteeinrichtung 4 sein, die auch in einem der Sensoren A bis M integriert sein kann.

Ein Sender 6, beispielsweise ein Telefon, eine Uhr, ein Funkchip oder dergleichen kann in dem Bereich 2 genutzt werden und sich dabei frei in dem Bereich 2 bewegen.

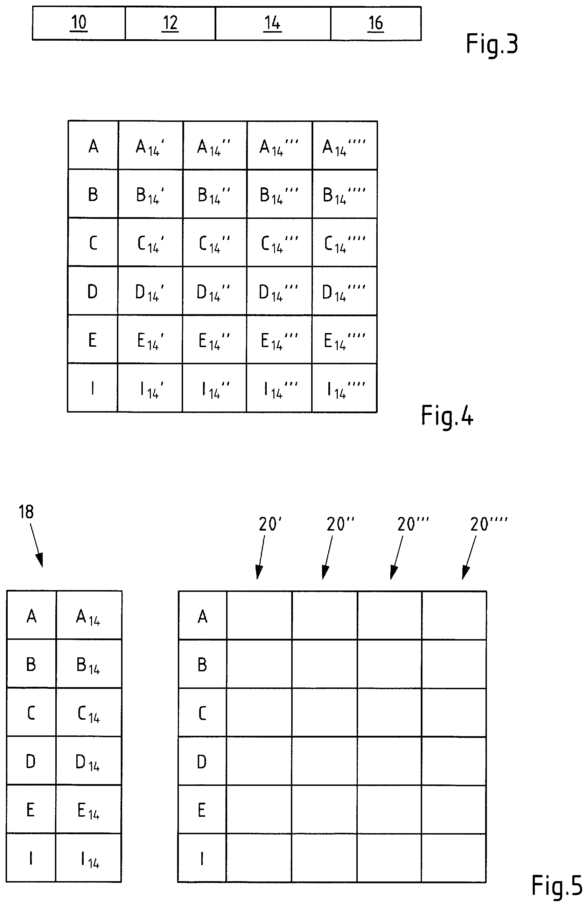

Der Sender 6 sendet auf der gleichen Frequenz, wie die Sensoren A-M, was in Fig. 2 dargestellt ist. In Intervallen sendet der Sender 6 seine Senderkennung aus, die beispielsweise eine eineindeutige Zeichenfolge ist. Jeder der Sensoren A-M in Fig. 2, gezeigt sind nur die Sensoren A-C, kann grundsätzlich diese Senderkennung empfangen, wenn die Feldstärke der Senderkennung am Sensor groß genug ist. Die Sensoren A-C sind drahtlos oder drahtgebunden mit der Auswertungseinrichtung 4 verbunden. Je nach Entfernung und sonstiger räumlicher Beziehung zwischen dem Sender 6 und den Sensoren A-M kann die Feldstärke des vom Sender 6 in einem der Sensoren A-C empfangenen Signals variieren. Die Sensoren A-C werten nicht nur die empfangene Senderkennung sondern auch die Feldstärke aus. Die von den Sensoren A-C empfangenen Senderinformationen werden in Empfangssituationen umgewandelt, wie sie in Fig. 3 als Datensatz dargestellt sind.

In Fig. 3 ist eine Empfangsinformation 8 als Datensatz dargestellt. In der Empfangsinformation 8 enthalten ist eine Senderkennung 10 des Senders 6, eine Sensoren Kennung 12 eines der Sensoren A-M sowie eine Information über die Empfangsfeldstärke 14 des Signals mit dem die Senderkennung empfangen wurde sowie weitere Prüfdaten oder dergleichen 16.

Die Senderkennung 10 kann eine eineindeutige Zeichenfolge sein, die einen jeden Sender 6 eindeutig identifiziert.

Die Sensorkennung 12 kann eine eineindeutige Zeichenfolge sein, die jeden Sensor AM eindeutig identifiziert.

Die Empfangsfeldstärke 14 kann eine Information darüber sein, wie groß das elektrische Feld des Signals mit dem die Senderkennung im Sensor A-C empfangen wurde war. Dies kann beispielsweise eine Betragsangabe sein. Diese drei Daten 10, 12, 14 zusammen mit Prüfdaten 16, beispielsweise CRC-Prüfdaten, können von den Sensoren A-M jeweils an die Auswerteeinrichtung 4 übermittelt werden.

Zu jedem Zeitpunkt, zu dem ein Sender 6 seine Senderkennung 10 aussendet, erstellt jeder Sensor A-M, der die Senderkennung 10 empfängt, eine Empfangsinformation 8, wie sie in Fig. 3 dargestellt ist.

In der Auswerteeinrichtung 4 wird für jeden einzelnen Sender 6 unter Verwendung der Senderkennung 10 die Information 12 zum Sensor A-M und die Empfangsfeldstärke 14 extrahiert. Die Information 12 von zumindest zwei Sensoren A-M hinsichtlich der Empfangsfeldstärke kann als aktuelle Signatur verstanden werden.

In einem Anlernprozess wird zumindest eine aktuelle Signatur, werden vorzugsweise mehrere aktuelle Signaturen einem räumlichen Bereich 2a-f zugeordnet, so dass eine Matrix aus Positionssignaturen gebildet werden kann, wie dies in Fig. 4 dargestellt ist.

Fig. 4 zeigt beispielsweise eine Positionssignatur, welche dem räumlichen Bereich 2b zugewiesen ist. Zu erkennen ist, dass von den Sensoren A, B, C, D, E und I jeweils ein Satz von Empfangsfeldstärken A14', B14', C14', D14', E14' und I14' gespeichert werden. Diese Informationen werden dem räumlichen Bereich 2b zugeordnet. Das heißt, die Matrix, wie sie in Fig. 4 dargestellt ist, die sich aus verschiedenen aktuellen Signaturen zusammensetzt, wird dem räumlichen Bereich 2b zugeordnet, so dass die Signaturen Positionssignaturen werden. Die Information 14 zu den Empfangsfeldstärken, die in der Matrix gemäß Fig. 4 gespeichert sind, repräsentieren ggf. auch leicht unterschiedliche Positionen des Senders 6 innerhalb des räumlichen Bereichs 2b, welche im Anlernprozess erfasst wurden.

Im Anlernprozess wird vorzugsweise für jeden räumlichen Bereich 2a-f zumindest eine Positionssignatur, was zumindest einer Spalte der Matrix nach Fig. 4 entspricht, erfasst, vorzugsweise jedoch mehrere Positionssignaturen in einer Matrix gemäß Fig. 4.

Während des Betriebs wird die Positionsdetektion dann so durchgeführt, dass eine aktuelle Signatur 18, wie in Fig. 5 angedeutet, erfasst wird, in der die Informationen 12 zu den jeweiligen Sensoren A-I sowie die entsprechenden Informationen 14 (A14 bis I14) zu den Empfangsfeldstärken enthalten sind.

Bei der Erfassung der aktuellen Signatur kann eine Mengenbeschränkung vorliegen, so dass beispielsweise lediglich diejenigen Sensoren A-M bzw. deren Empfangsinformationen berücksichtigt werden, bei denen die Empfangsfeldstärken A14-I14 am größten sind, also die Sensoren A-M mit den stärksten Empfangsfeldstärken des Signals der Senderkennung 10.

Anschließend wird die aktuelle Signatur mit den einzelnen Positionssignaturen 20', 20", 20"', 20"" in der Matrix gemäß Fig. 4 verglichen, wobei der Wert der Empfangsfeldstärke jeweils für jeden einzelnen Sensor verglichen wird und eine Summe der Differenzbeträge bestimmt wird. Für jede Positionssignatur 20' wird eine Summe der Differenzbeträge zwischen den jeweiligen gespeicherten Empfangsfeldstärken und den Empfangsfeldstärken der aktuellen Signatur 18 errechnet. Anschließend kann ein Mittelwert für die Summe der Differenzbeträge über alle Positionssignaturen 20'-20"" errechnet werden. Dies wird für alle Matrizen durchgeführt, das heißt für jeden der Räume 2a-f existiert eine Matrix gemäß Fig. 4 und der Vergleich gemäß Fig. 5 wird für jeden Raum durchgeführt.

Anschließend wird ermittelt, welcher Differenzbetrag am kleinsten ist und die aktuelle Signatur 18 wird dem Raum zugeordnet, dem auch die entsprechende Matrix mit dem kleinsten Differenzbetrag zugeordnet ist. Im vorliegenden Beispiel könnte dies beispielsweise der räumliche Bereich 2b sein.

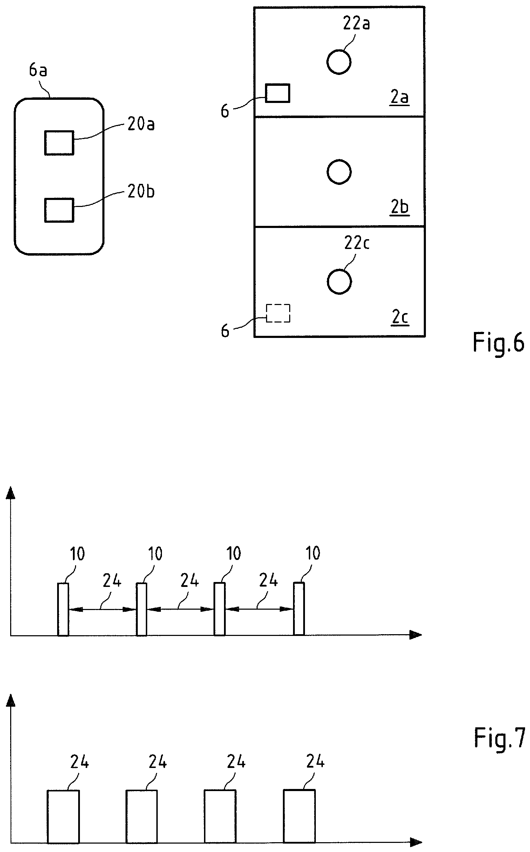

Fig. 6 zeigt ein Anwendungsbeispiel der Positionserkennung. Ein Sender 6 kann dabei nacheinander in verschiedenen räumlichen Bereichen 2a, b, c anwesend sein. Dieser Sender 6 kann beispielsweise ein mobiler Handsender 6a oder von diesem mobilen Handsender ein getrenntes Bauteil sein. Auf dem Handsender 6a sind Bedienelemente 20a, 20b vorgesehen. Mit den Bedienelementen 20a, 20b ist es beispielsweise möglich, bestimmte Funktionen des Heimautomatisierungssystems anzusteuern. So kann beispielsweise das Bedienelement 20a so programmiert sein, dass stets eine, wenn vorhandene, Deckenbeleuchtung eines räumlichen Bereichs 2a-c aktiviert wird. Der mobile Sender 6a wird nun in den räumlichen Bereichen 2a-f bewegt und es wird zunächst beispielsweise erkannt, dass der mobile Sender 6a in dem räumlichen Bereich 2a ist. Wird in diesem Moment das Bedienelement 20a gedrückt, so wird abhängig von der erkannten Position im räumlichen Bereich 2a beispielsweise die Deckenleuchte 22a ein- bzw. ausgeschaltet.

Bewegt sich der Sender 6a dann jedoch in den Raum 2c und wird dies erkannt und wird erneut das Bedienelement 20a betätigt, so wird nicht mehr die Leuchte 22a geschaltet sondern nunmehr die Leuchte 22c.

Somit wird ein und demselben Bedienelement 20a eine generische Funktion zugeordnet, welche jedoch abhängig vom erkannten räumlichen Bereich einer bestimmten Aktionen bzw. bestimmten Aktor zugeordnet wird.

Fig. 7 zeigt den zeitlichen Verlauf des Sendens einer Senderkennung 10 in Intervallen 24 durch den Sender 6. Die Intervalldauer der Intervalle 24 kann durch die Auswerteeinrichtung 4 erfasst werden und entsprechend der Intervalldauer kann eine Aktivierung der Sensoren A-M so erfolgen, dass diese zu bestimmten Zeiten lauschen, wobei diese Zeiten mit den Sendezeitpunkten der Senderkennung 10 übereinstimmen.

Anders herum ist es auch möglich, dass die Zeiten, zu denen die Sensoren A-M lauschen, bekannt sind und abhängig hiervon von der Auswerteeinrichtung 4 der Sender 6 instruiert wird, die Intervallbreite 24 entsprechend einzustellen um dann entsprechend die Senderkennung 10 nur dann auszusenden, wenn die Sensoren A-M ohnehin lauschen. Beides führt zur Reduktion des Stromverbrauchs entweder im Sender 6 oder in den Sensoren A-M.

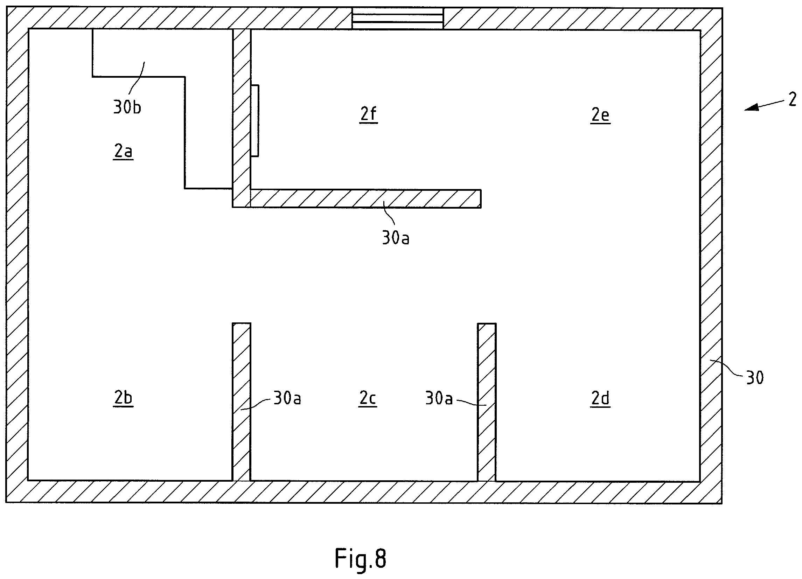

Fig. 8 zeigt den Grundriss 30 des Bereichs 2. Der Bereich 2 gliedert sich in die Teilbereiche 2a-f auf. In dem Grundriss 30 sind Mauern 30a sowie feste Einbauten 30b zu erkennen.

Ein Sender 6 kann, während er sich im Grundriss 30 bewegt, laufend überwacht werden. Ein Sender 6 kann z.B. auf einem Hausroboter, z.B. einem Staubsaugerroboter montiert sein. Aus den von dem Sender 6 empfangenen Positionssignaturen wird ermittelt, wo sich im Grundriss 30 Wände 30a und Einbauten 30b befinden. In diesen Bereichen wird keine Positionssignatur empfangen so dass diese Bereich als "tote" Bereiche des Grundrisses angesehen werden können.

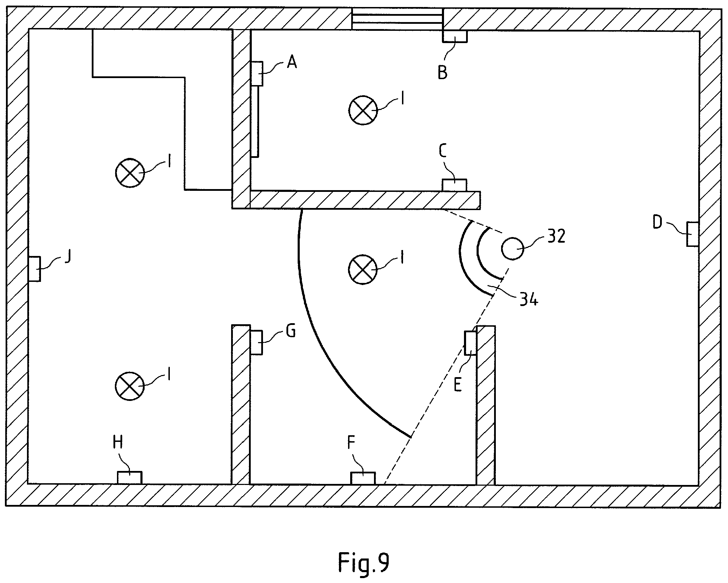

Der einmal erfasste Grundriss 30 kann dazu genutzt werden, dass darin Aktoren und Sensoren positioniert werden. Dies ist in der Figur 9 zu erkennen. Die Positionierung der Sensoren oder Aktoren A-J kann manuell erfolgen, in dem der Nutzer in der aktuellen Ansicht des Grundrisses 30 die Sensoren oder Aktoren A-J dort platziert. Auch ist es möglich, die Positionssignaturen der jeweiligen Sensoren oder Aktoren A-J zu erfassen und deren absolute oder auch relative Position zueinander in dem Grundriss 30 zu bestimmen.

In der Figur 9 sind die Sensoren oder Aktoren A-J beispielhaft wie folgt. Der Sensor A ist ein Thermostat, welches an einem Heizkörper angeschlossen ist und somit gleichzeitig ein Stellaktor mit einem Stellantrieb für die Heizkörper. Der Sensor B ist beispielsweise ein Fensteröffnungssensor. Der Sensor C ist ein Taster. Der Sensor D ist ein Bewegungsmelder. Die Sensoren E und G sind Schalter. Die Sensoren F, H und J sind wie der Sensor A jeweils ein Thermostat. Repräsentativ für Schaltaktoren sind die Lampen I angezeigt.

Bewegt sich der Nutzer durch den Grundriss 30, was z.B. durch den Nutzer 32 dargestellt ist, kann seine Position bestimmt werden. Der Nutzer 32 hat dabei auch häufig eine Anzeige bei sich, die er in eine bestimmt, hier als 34 bezeichnete Blickrichtung ausrichten kann. Wenn die Blickrichtung 34 bestimmt wurde, kann der Bereich des Grundrisses 30 dargestellt werden, der in dieser Blickrichtung erkennbar ist. Dabei kann insbesondere eine Augmented Reality Anwendung unterstützt werden. Das Anzeigegerät des Nutzer erfasst ein Bild in der Blickrichtung 34. Diese Bild wird zunächst auf er Anzeige dargestellt.

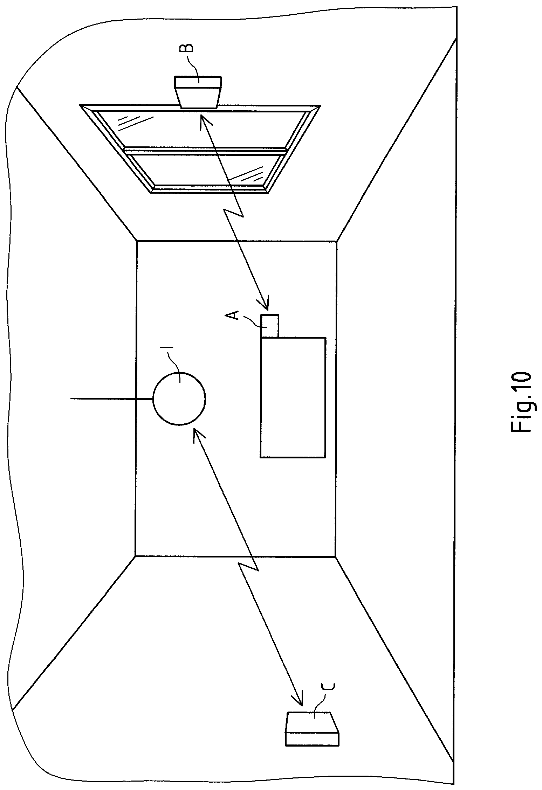

Eine solche Darstellung eines Bildes in einer bestimmten Blickrichtung 34 ist in Fig. 10 dargestellt. Die Anzeige zeigt das aufgenommene Bild.

Zusätzlich zu dem aufgenommenen Bild kann in der Anzeige ein Teil des Grundrisses 30 dargestellt werden. So ist es z.B. möglich, in die Darstellung der Aufnahme die Wände 30a einzublenden, z.B. als Overlay über das reale Bild.

Neben der Darstellung des Teils des Grundrisses 30 kann ermittelt werden, welche Sensoren oder Aktoren A-J im Bereich des Blickfeldes sind. In dem in Fig. 9 dargestellten Beispiel sind dies die Sensoren/Aktoren E, F, G, I, J. Diese Sensoren/Aktoren E, F, G, I, J werden durch z.B. Piktogramme in der Anzeige dargestellt. Auch ist es möglich das Statusparameter oder sonstige Information, wie z.B. der Name des Sensors/Aktors E, F, G, I, J eingeblendet wird.

Anschließend kann dem Nutzer eine Verbindung zwischen den Sensoren/Aktoren E, F, G, I, J dargestellt werden. Die kann der Nutzer z.B. über ein Menü einstellen. Die Anordnung der Sensoren/Aktoren E, F, G, I, J in Fig. 10 entspricht nicht der in Fig. 9, was für das Verständnis aber unerheblich ist. In der Darstellung in Fig. 10 sind in dem aufgenommenen Bild welches dargestellt ist, weiterhin die Sensoren/Aktoren A, B, C und I eingeblendet. Der Nutzer kann durch Auswahl in einem Menü die Zuordnung der Sensoren zu den Aktoren anzeigen lassen. Dies ist in Fig. 10 durch Verbindungslinien zwischen den Sensoren und Aktoren dargestellt. Hier ist zu erkennen, das in dem Beispiel eine Verbindung zwischen dem Fensterkontakt B und dem Thermostat A besteht. Tippt der Nutzer aus diese Verbindung, kann er sich z.B. die dieser Zuordnung zugeordnete Programmregel anzeigen lassen. Im Beispiel kann dies z.B. eine Absenkung der Solltemperatur um 3 Grad bei Öffnung des Fensters sein.

Auch eine Zuordnung zwischen dem Taster C und dem Aktor I ist zu erkennen. Z dieser Zuordnung kann die Regel programmiert sein, dass bei Drücken des Tasters C der Aktor I 10 Minuten eingeschaltet bleibt.

Nicht dargestellt in Fig. 10 ist z.B. die Anzeige von Staus der Sensoren/Aktoren E, F, G, I, J. Aber auch eine solche Anzeige kann der Nutzer über ein Menü aktivieren.

Mit Hilfe der Kamera, die an der Anzeigeeinrichtung vorhanden ist, lassen sich auch Nutzergesten erfassen. In dem in Fig. 10 dargestellten Beispiel könnte der Nutzer z.B. eine Handbewegung von dem Sensor C zu dem Thermostat A machen. Diese Handbewegung könnte durch die Kamera erfasst werden. In diesem Fall könnte zunächst eine Zuordnung zwischen einem Sensor und einem Aktor, vorliegen z.B. dem Taster C und dem Thermostat A, gespeichert werden. Anschließend könnte dem Nutzer ein Menü gezeigt werden, in dem der die für eine solche Zuordnung möglichen Programmregeln dargestellt bekommt. Vorliegend könnte das z.B. eine Erhöhung der Solltemperatur um X Grad Celsius für Y Minuten sein.

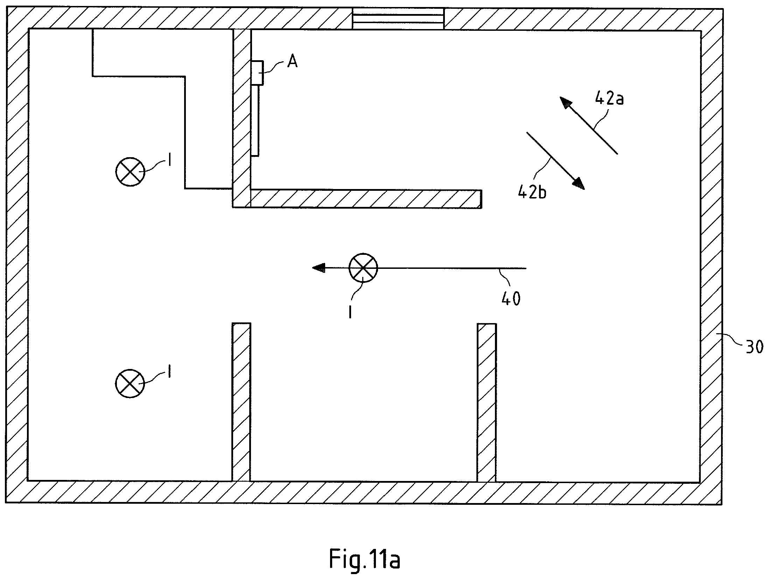

Neben der Zuordnung und Programmierung der Sensoren/Aktoren E, F, G, I, J ist es möglich, positionsbasierte Aktionen auszulösen. Hierzu kann der Nutzer in der Ansicht des Grundrisses, wie sie z.B. in Fig. 11a gezeigt ist, Bewegungsvektoren 40, 42a, 42b definieren. Diese kann er z.B. mit einem Eingabegerät in den Grundrtiss 30 einzeichnen.

Anschließend kann der Nutzer den Bewegungsvektoren 40, 42s, 42b Aktionen zuweisen. Dem Bewegungsvektor 40 kann z.B. die Aktion "Aktivieren der Aktoren I" zugewiesen werden.

Wenn nun bei der Positionsdetektion eines Senders 6 festgestellt wird, dass er sich entlang des Vektors 40 bewegt, erfolgt die diesem Vektor 40 zugewiesene Aktion automatisch und die Leuchten I werden eingeschaltet.

Ähnliches kann für die Vektoren 42a, 42b programmiert werden. Für den Vektor 42a kann z.B. programmiert werden, die Solltemperatur des Thermostates A um 1 Grad Celsius zu erhöhen, und für den Vektor 42b, die Solltemperatur um 1 Grad Celsius zu verringern. Hierdurch kann beim Betreten des Raumes, was durch die Bewegung des Senders 6 entlang des Vektors 42a detektiert wird, die Raumtemperatur erhöht werden, und beim Verlassen des Raumes, durch Bewegung entlang des Vektors 42b, entsprechend verringert werden.

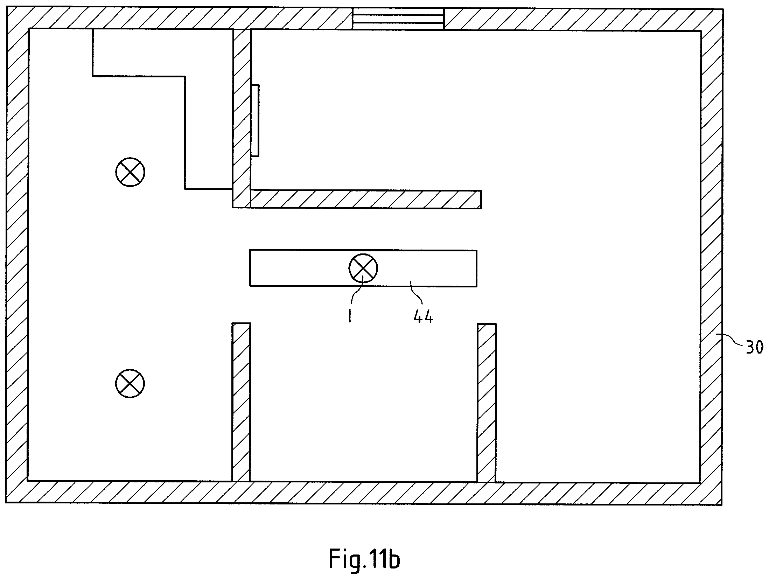

In Fig. 11b ist ein Bewegungskorridor 44 gezeigt. Ein solcher Korridor 44 kann ebenfalls durch den Nutzer im Grundriss 30 programmiert werden.

Bewegt sich der Nutzer sich entlang dieses Korridors 44, so wird die programmierte Aktion "Aktivieren des Aktors I" durchgeführt.

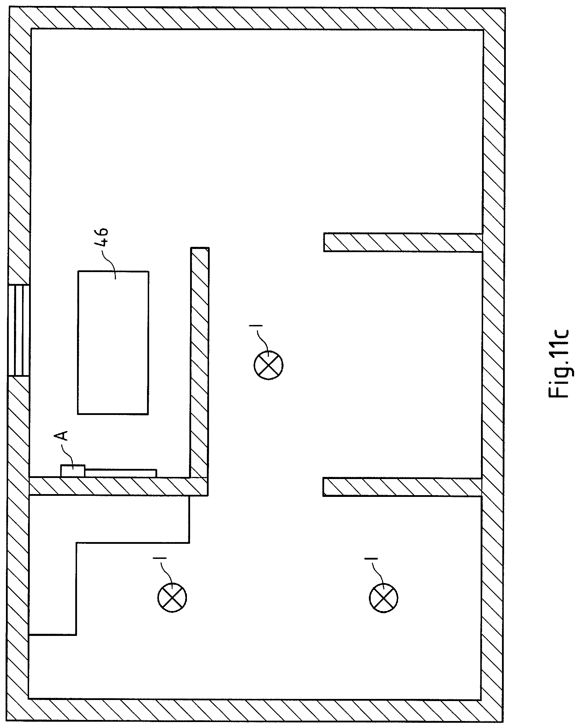

In Fig. 11c ist ein weiteres Beispiel gezeigt. Dort ist ein Triggerpunkt 46 als Fläche eingezeichnet, so wie der Nutzer diesen im Grundriss 30 einzeichnen/definieren kann. Es kann diesem Triggerpunkt 44 z.B. die Aktion zugeordnet werden, die Solltemperatur des Thermostates A im 1 Grad Celsius zu erhöhen. Zusätzlich kann eine weitere Aktion dem Triggerpunkt 44 zugeordnet werden. Dies kann z.B. die Aktion "Ausschalten der Aktoren I" sein. Somit können, wenn der Sender 6 in dem Bereich des Triggerpunktes 46 detektier wird, mehrere programmierte Aktionen ausgelöst werden.

## Patentansprüche

1. Heimautomatisierungssystem umfassend,
- zumindest einer Auswerteeinrichtung,- Anzeigemittel eingerichtet zur Anzeige einer Ansicht von zumindest einem Teil eines Grundrisses einer räumlichen Umgebung des Heimautomatisierungssystem und,
- Programmiermittel eingerichtet zur Programmierung zumindest einer Aktion eines Aktors des Heimautomatisierungssystems basierend auf der aktuell angezeigten Ansicht des Grundrisses und einer Funktion des Aktors und/oder eines Sensors des Heimautomatisierungssystems,
**dadurch gekennzeichnet,**
- **dass** die Auswerteeinrichtung aus von zumindest zwei Sensoren empfangenen Empfangssignalen eines Senders eine jeweilige Empfangsfeldstärke zusammen mit einer Senderkennung und einer Sensorkennung als Empfangsinformationen erfasst und aus den Empfangsinformationen eine Position ermittelt,
- so dass eine mobile Anzeigeeinrichtung der Anzeigemittel einen Teil des Grundrisses abhängig von der detektierten Position in dem Grundriss darstellen.

2. Heimautomatisierungssystem nach Anspruch 1,
**dadurch gekennzeichnet,**
- **dass** die Programmiermittel dazu eingerichtet sind, basierend auf der aktuell angezeigten Ansicht einem Aktor und/oder einem Sensor eine Position im Grundriss zuzuordnen.

3. Heimautomatisierungssystem nach Anspruch 1 oder 2,
**dadurch gekennzeichnet,**
- **dass** die Programmiermittel dazu eingerichtet sind, in der aktuell angezeigten Ansicht in dem Grundriss virtuelle Bewegungsvektoren und/oder virtuelle Triggerpunkte zu definieren und diesen jeweils zumindest eine Aktion eines Aktors zuzuordnen.

4. Heimautomatisierungssystem nach einem der vorangehenden Ansprüche,
**dadurch gekennzeichnet,**
- **dass** Erfassungsmittel zur Erfassung des Grundrisses eingerichtet sind, insbesondere dass die Erfassungsmittel zur Erfassung eines 3D Grundrisses eingerichtet sind.

5. Heimautomatisierungssystem nach einem der vorangehenden Ansprüche,
**dadurch gekennzeichnet,**
- **dass** die Anzeigemittel zur Anzeige einer Ansicht des Grundrisses zusammen mit einer Anzeige eines realen Bildes eingerichtet sind.

6. Heimautomatisierungssystem nach einem der vorangehenden Ansprüche,
**dadurch gekennzeichnet,**
- **dass** die Anzeigemittel zur Anzeige von Aktoren und/oder Sensoren repräsentierenden Ikonen zusammen mit einem realen Bild eingerichtet sind.

7. Heimautomatisierungssystem nach einem der vorangehenden Ansprüche,
**dadurch gekennzeichnet,**
- **dass** die Anzeigemittel zur Anzeige der Ikonen abhängig von einem Status eines Aktors und/oder Sensors eingerichtet sind.

8. Heimautomatisierungssystem nach einem der vorangehenden Ansprüche,
**dadurch gekennzeichnet,**
- **dass** die Programmiermittel zum Empfangen von Statuswerten von simulierten Umgebungsvariablen eingerichtet sind, wobei die Umgebungsvariablen einen programmierten Einfluss auf einen Status eines Aktors und/oder Sensors haben und dass die Anzeigemittel zum Anzeigen eines auf den simulierten Umgebungsvariablen basierenden Status des Aktors und/oder Sensors eingerichtet sind.

9. Heimautomatisierungssystem nach einem der vorangehenden Ansprüche,
**dadurch gekennzeichnet,**
- **dass** Erfassungsmittel zur Erfassung einer Nutzergeste eingerichtet sind, dass die Programmiermittel die erfasste Nutzergeste abhängig von der Anzeige des Grundrisses auswerten und zumindest einen Aktor und/oder Sensor abhängig von der Nutzergeste und der aktuell angezeigten Ansicht des Grundrisses programmieren.

10. Heimautomatisierungssystem nach einem der vorangehenden Ansprüche,
**dadurch gekennzeichnet,**
- **dass** die Auswerteeinrichtung für jeweils einen Sender aus den Empfangsinformationen von zumindest zwei Sensoren die jeweiligen Empfangsfeldstärken und Sensorkennungen als aktuelle Signatur erfasst.

11. Verfahren zum Betreiben eines Heimautomatisierungssystems, insbesondere - nach einem der vorangehenden Ansprüche bei dem,
- eines Ansicht von zumindest einem Teil eines Grundrisses einer räumlichen Umgebung des Heimautomatisierungssystem angezeigt wird und,
- zumindest eine Aktion eines Aktors des Heimautomatisierungssystems basierend auf der aktuell angezeigten Ansicht des Grundrisses und einer Funktion des Aktors und/oder eines Sensors des Heimautomatisierungssystems programmiert wird,
**dadurch gekennzeichnet,**
- **dass** aus von zumindest zwei Sensoren empfangenen Empfangssignalen eines Senders eine jeweilige Empfangsfeldstärke zusammen mit einer Senderkennung und einer Sensorkennung als Empfangsinformationen erfasst wird und aus den Empfangsinformationen eine Position ermittelt wird,
- so dass ein Teil des Grundrisses abhängig von der detektierten Position in dem Grundriss dargestellt wird.

## Claims

1. Home automation system comprising,
- at least one evaluation device,
- display means arranged to display a view of at least a part of a floor plan of a spatial environment of the home automation system, and,
- programming means arranged for programming at least one action of an actuator of the home automation system based on the currently displayed view of the floor plan and on a function of the actuator and/or a sensor of the home automation system,
**characterized in that**
- the evaluation device obtains, from the reception signals of a transmitter received by at least two sensors, a respective reception field strength together with a transmitter identification and a sensor identification as reception information, and detects a position from the reception information,
- such that a mobile display device of the display means displays a part of the floor plan depending on the detected position within the floor plan.

2. Home automation system according to claim 1,
**characterized in that**
- the programming means are arranged to associate a position in the floor plan with an actuator and/or a sensor based on the currently displayed view.

3. Home automation system according to claim 1 or 2,
**characterized in that**
- the programming means are arranged to define virtual movement vectors and/or virtual trigger points in the floor plan in the currently displayed view and to associate with them at least one action of an actuator.

4. Home automation system according to one of the preceding claims, **characterized in that**
- detection means are arranged to detect the floor plan, in particular **in that** the detection means are set up for detecting a 3D floor plan.

5. Home automation system according to one of the preceding claims, **characterized in that**
- the display means are arranged to display a view of the floor plan together with a display of a real image.

6. Home automation system according to one of the preceding claims, **characterized in that**
- the display means are arranged to display icons representing actuators and/or sensors together with a real image.

7. Home automation system according to one of the preceding claims, **characterized in that**
- the display means are arranged to display the icons depending on a status of an actuator and/or sensor.

8. Home automation system according to one of the preceding claims, **characterized in that**
- the programming means are arranged to receive status values of simulated environment variables, the environment variables having a programmed influence on a status of an actuator and/or sensor, and **in that** the display means are arranged to display a status of the actuator and/or sensor based on the simulated environment variables.

9. Home automation system according to one of the preceding claims, **characterized in that**
- detection means are arranged to detect a user gesture, the programming means evaluate the detected user gesture depending on the display of the floor plan and program at least one actuator and/or sensor depending on the user gesture and the currently displayed view of the floor plan.

10. Home automation system according to one of the preceding claims, **characterized in that**
the evaluation device captures, for one transmitter respectively, the respective reception field strengths and sensor identifications from the reception information of at least two sensors as the current signature.

11. Method for operating a home automation system, in particular according to one of the preceding claims in which,
- a view of at least a part of a floor plan of a spatial environment of the home automation system is displayed, and,
- at least one action of an actuator of the home automation system is programmed based on the currently displayed view of the floor plan and on a function of the actuator and/or a sensor of the home automation system,
**characterized in that**
from reception signals of a transmitter received by at least two sensors, a respective reception field strength together with a transmitter identification and a sensor identification is captured as a reception information and a position is detected from the reception information,
such that a part of the floor plan is displayed depending on the detected position within the floor plan.

## Revendications

1. Système domotique comprenant :
- au moins un dispositif d'exploitation, des moyens de visualisation conçus pour l'affichage d'une vue au moins d'une partie d'un plan d'ensemble d'un environnement spatial du système domotique, et
- des moyens de programmation conçus pour la programmation au moins d'une action d'un actionneur du système domotique, en se basant sur la vue du plan d'ensemble, qui est effectivement affichée, et en se basant sur une fonction de l'actionneur et/ou d'un capteur du système domotique,
**caractérisé**
- **en ce que** le dispositif d'exploitation, à partir de signaux de réception d'un émetteur, lesdits signaux étant reçus par au moins deux capteurs, détecte, comme informations de réception, une intensité de champ de réception respective, ainsi qu'un identifiant d'émetteur et un identifiant de capteur, et ledit dispositif d'exploitation détermine une position d'après les informations de réception,
- de sorte qu'un dispositif de visualisation mobile des moyens de visualisation représente une partie du plan d'ensemble, en fonction de la position détectée dans le plan d'ensemble.

2. Système domotique selon la revendication 1, **caractérisé**
- **en ce que** les moyens de programmation sont conçus dans le but, en se basant sur la vue qui est effectivement affichée, d'affecter à un actionneur et/ou à un capteur une position se trouvant dans le plan d'ensemble.

3. Système domotique selon la revendication 1 ou 2, **caractérisé**
- **en ce que** les moyens de programmation sont conçus dans le but de définir, dans la vue qui est effectivement affichée, des vecteurs de mouvement virtuels et/ou des points de déclenchement virtuels se trouvant dans le plan d'ensemble, et d'affecter à chaque fois à ces vecteurs de mouvement et à ces points de déclenchement, au moins une action d'un actionneur.

4. Système domotique selon l'une quelconque des revendications précédentes,
**caractérisé**
- **en ce que** des moyens de détection sont conçus pour la détection du plan d'ensemble, en particulier en ce que les moyens de détection sont conçus pour la détection d'un plan d'ensemble en 3D.

5. Système domotique selon l'une quelconque des revendications précédentes,
**caractérisé**
- **en ce que** les moyens de visualisation sont conçus pour l'affichage d'une vue du plan d'ensemble, ledit affichage étant réalisé en même temps qu'un affichage d'une image réelle.

6. Système domotique selon l'une quelconque des revendications précédentes,
**caractérisé**
- **en ce que** les moyens de visualisation sont conçus pour l'affichage d'icônes représentant des actionneurs et/ou des capteurs, lesdites icônes étant affichées en même temps qu'une image réelle.

7. Système domotique selon l'une quelconque des revendications précédentes,
**caractérisé**
- **en ce que** les moyens de visualisation sont conçus pour l'affichage des icônes en fonction d'un état d'un actionneur et/ou d'un capteur.

8. Système domotique selon l'une quelconque des revendications précédentes,
**caractérisé**
- **en ce que** les moyens de programmation sont conçus pour la réception de valeurs d'état de variables d'environnement simulées, où les variables d'environnement ont une influence programmée sur un état d'un actionneur et/ou d'un capteur, et en ce que les moyens de visualisation sont conçus pour l'affichage d'un état de l'actionneur et/ou du capteur, l'état étant considéré en se basant sur les variables d'environnement simulées.

9. Système domotique selon l'une quelconque des revendications précédentes,
**caractérisé**
- **en ce que** des moyens de détection sont conçus pour la détection d'un geste d'un utilisateur, en ce que les moyens de programmation exploitent le geste de l'utilisateur, qui a été détecté, en fonction de l'affichage du plan d'ensemble, et programment au moins un actionneur et/ou un capteur en fonction du geste de l'utilisateur et en fonction de la vue du plan d'ensemble, qui est effectivement affichée.

10. Système domotique selon l'une quelconque des revendications précédentes,
**caractérisé**
- **en ce que** le dispositif d'exploitation détecte à chaque fois pour un émetteur, comme signature active, les intensités de champ de réception respectives et les identifiants de capteurs respectifs, qui sont détectés à partir des informations de réception provenant au moins de deux capteurs.

11. Procédé permettant de faire fonctionner un système domotique, en particulier selon l'une quelconque des revendications précédentes, procédé dans lequel
- est affichée une vue au moins d'une partie d'un plan d'ensemble d'un environnement spatial du système domotique, et
- au moins une action d'un actionneur du système domotique est programmée, en se basant sur la vue du plan d'ensemble, qui est effectivement affichée, et en se basant sur une fonction de l'actionneur et/ou d'un capteur du système domotique, **caractérisé**
- **en ce qu'**une intensité de champ de réception respective est détectée en même temps qu'un identifiant d'émetteur et qu'un identifiant de capteur, ces informations considérées comme des informations de réception étant détectées à partir de signaux de réception d'un émetteur, lesdits signaux étant reçus par au moins deux capteurs, et une position est déterminée d'après les informations de réception,
- de sorte qu'une partie du plan d'ensemble est représentée en fonction de la position détectée dans le plan d'ensemble.
